# EUROPÄISCHE PATENTSCHRIFT

(11) **EP 3 888 972 B1**
(45) Veröffentlichungstag und Bekanntmachung des Hinweises auf die Patenterteilung: **23.11.2022**
(21) Anmeldenummer: 21020166.1
(22) Anmeldetag: 30.03.2021
(51) Int. Cl.: B60P 7/08, G01L 5/04, G01L 5/102, G01L 5/108, F16B 2/24, F16B 19/02, B60N 2/28

(54) **VORRICHTUNG ZUR ÜBERWACHUNG DER IN EINEM GURTBAND WIRKENDEN SPANNKRAFT**
DEVICE FOR MONITORING THE TENSION FORCE ACTING IN A BELT
DISPOSITIF DE SURVEILLANCE DE LA FORCE DE TENSION AGISSANT DANS UNE COURROIE

(30) Priorität: 01.04.2020 DE 102020109073
(43) Veröffentlichungstag der Anmeldung: 06.10.2021
(73) Patentinhaber: BPW Bergische Achsen KG, 51674 Wiehl (DE)
(72) Erfinder: Werner, Frank, 51515 Kürten (DE); Löwen, Nikolaj, 42287 Wuppertal (DE); Essert, Adrian, 53127 Bonn (DE); Lamers, Christopher, 51063 Köln (DE); Prinz, Adrian, 51674 Wiehl (DE)
(74) Vertreter: DREISS Patentanwälte PartG mbB

(56) Entgegenhaltungen:
- AU-B2- 600 471
- DE-A1-102018 115 599
- US-A1- 2017 115 173
- US-A1- 2018 328 803
- US-B1- 7 112 023

## Beschreibung

Die Erfindung betrifft eine Vorrichtung zur Überwachung der in einem Gurtband wirkenden Spannkraft, mit einem ein erstes Gehäuseteil und ein zweites Gehäuseteil umfassenden Gehäuse, einer Hindurchführung zwischen den Gehäuseteilen für das Gurtband, einem in dem Gehäuse angeordneten, gegen eine der Flachseiten des Gurtbandes anliegenden Sensorbauteil, und einer Einrichtung zum Erfassen der Auslenkung oder der Auslenkkraft des Sensorbauteils quer zur Gurtlängsrichtung, wobei die Gehäuseteile einerseits an einem ein Gelenk bildenden Scharnierrand und andererseits an einem Verschlussrand miteinander verbunden sind, wobei sich ein Schließbolzen mit seiner Bolzenachse längs des Verschlussrandes erstreckt und mit einem ersten Längsabschnitt durch eine Öffnung in dem ersten Gehäuseteil, und mit einem zweiten Längsabschnitt durch eine Öffnung in dem zweiten Gehäuseteil hindurchführt.

Eine solche Vorrichtung zur Überwachung der Spannkraft in einem der Ladungssicherung in einem Nutzfahrzeug dienenden Gurtband ist aus der DE 10 2018 115 599 A1 bekannt. Das aus zwei Gehäuseteilen bestehende Gehäuse der Vorrichtung ist entlang zweier Längsränder verriegelt. Zur Verriegelung dienen Gewindebolzen entlang der beiden Längsränder des Gehäuses. Die Gewindebolzen sind durch Laschen hindurchgesteckt, wobei die Laschen teilweise an dem ersten Gehäuseteil und teilweise an dem zweiten Gehäuseteil ausgebildet sind. Ist das Gehäuse verschlossen und sind beide Bolzen vollständig durch die Laschen hindurchgesteckt, wird der Gewindebolzen mittels einer Mutter und einer Kontermutter gesichert, die hierzu auf einen Gewindeabschnitt des Gewindebolzens aufgeschraubt werden müssen.

Zwar ist es zum Öffnen des Gehäuses und Einlegen des Ladungssicherungsgurts zwischen die beiden Gehäuseteile nicht erforderlich, beide Gewindebolzen zu entfernen. Vielmehr kann einer der beiden Gewindebolzen montiert bleiben, und so als Scharnierachse dienen. Gleichwohl ist die Entriegelung und das erneute Verschließen an dem anderen Gehäuselängsrand eher aufwendig durch die Notwendigkeit, von dem Gewindeabschnitt des Gewindebolzens die Mutter und Kontermutter abzuschrauben und diese Teils später wieder auf den Gewindeabschnitt aufzuschrauben. Nachteilig bei der Handhabung des Verschlusses ist auch die Anzahl der zu handhabenden, losen Einzelteile. Denn zunächst muss der Gewindebolzen als erstes Teil eingeführt werden, bevor mindestens ein zweites Teil in Gestalt der Mutter separat gehandhabt, nämlich in mehreren Gewindeumdrehungen aufgeschraubt werden muss. Außerdem erhöht sich mit der Teileanzahl auch die Gefahr eines Verlusts. Bereits bei Fehlen nur eines Teils ist ein sicheres Verschließen der Vorrichtung nicht mehr möglich.

**Aufgabe** der Erfindung ist es daher, die Bedienung der Vorrichtung und insbesondere die Handhabung des Verschlusses einfacher zu machen, ohne bei der mechanischen Robustheit des Verschlusses Abstriche zu machen.

Zur **Lösung** dieser Aufgabe wird bei der gattungsgemäßen Vorrichtung zur Überwachung der in einem Gurtband wirkenden Spannkraft vorgeschlagen, dass zur Längsverriegelung des Schließbolzens dieser zusätzlich einen Sperrabschnitt aufweist, auf dem der Bolzenquerschnitt reduziert ist
- gegenüber dem Bolzenquerschnitt auf dem ersten Längsabschnitt und/oder gegenüber dem Bolzenquerschnitt auf dem zweiten Längsabschnitt,
- gegenüber einem entgegen der Löserichtung des Schließbolzens auf den Sperrabschnitt unmittelbar folgenden Bolzenquerschnitt,
und dass ein Sperrelement, welches in beide Richtungen der Bolzenachse unbeweglich an dem Gehäuse festgelegt ist, gegen den Sperrabschnitt anliegt.

Bei der so ausgebildeten Vorrichtung ist die praktische Handhabung des Verschlusses sehr einfach und damit bedienungsfreundlich. Mit wenigen Bauteilen wird eine Längsarretierung des Schließbolzens und seine zuverlässige Sicherung gegen ein unbeabsichtigtes Lösen des Schließbolzens durch Herausziehen aus dem zweiteiligen Gehäuse erreicht, wobei trotzdem das Öffnen und Verschließen auch einhändig durchführbar ist. Die Verwendung des stabil ausführbaren Schließbolzens stellt sicher, dass der Verschluss den durch die Gurtspannung an dem Gehäuse wirkenden Kräften gut standhalten kann und daher bei der mechanischen Robustheit des Verschlusses keine Abstriche zu machen sind. Zur Sicherung des Schließbolzen gegen sein Herausziehen in Löserichtung dient ein Sperrelement, welches von außen gegen den Sperrabschnitt des Schließbolzens anliegt. Das Sperrelement ist hierzu in beide Richtungen der Bolzenachse unbeweglich an dem Gehäuse festgelegt, kann dabei aber als ein quer zur Bolzenachse federndes Element ausgebildet sein.

Bevorzugte und vorteilhafte Ausgestaltungen der Vorrichtung sind in den Unteransprüchen angegeben.

Von Vorteil für die erleichterte Handhabung des Schließbolzens beim Lösen und Verriegeln ist, wenn ein an dem einen Ende des Schließbolzens ausgebildeter Bolzenkopf, dessen Durchmesser größer als der übrige Durchmesser des Schließbolzens ist, entgegen der Löserichtung an dem Gehäuse axial abgestützt ist.

Von Vorteil ist, wenn das Sperrelement federnd gegen die Außenseite des Sperrabschnitts abgestützt ist. Durch die federnde Abstützung des Sperrelements lässt sich das Sperrelement von Hand unter leichter Kraftausübung quer, bezogen auf die Bolzenachse, bewegen oder verformen. Auf diese Weise wird zunächst ein sicheres Entsperren des Schließbolzens herbeigeführt, ohne dass dieser damit schon vollständig die Gehäusehälften frei geben würde.

Ferner wird vorgeschlagen, dass das Sperrelement ein Metallstreifen mit einem durch zwei Flächen und zwei Seitenränder begrenzten Querschnitt ist, wobei der Metallstreifen mit einer der Flächen gegen die Außenseite Sperrabschnitts abgestützt ist. Hierbei ist für ein sicheres Sperren von zusätzlichem Vorteil, wenn einer der beiden Seitenränder des Metallstreifens einer an dem Schließbolzen ausgebildeten, stufenförmigen Erweiterung axial gegenüberliegt.

Der das Sperrelement bildende Metallstreifen besteht vorzugsweise aus einem federelastischen Material, z. B. einem Federstahl oder einem anderen Metall.

Zur Festlegung des Sperrelements an dem Gehäuse ist vorzugsweise ein Endabschnitt des Metallstreifens an dem Gehäuse festgelegt, wobei auf dem Endabschnitt der eine Seitenrand des Metallstreifens gegen eine erste Gehäusefläche und zugleich der andere Seitenrand des Metallstreifens gegen eine zweite Gehäusefläche anliegt. Auf diese Weise wird der als Sperrelement dienende Metallstreifen zuverlässig in beide Längsrichtungen der Bolzenachse an dem Gehäuse fixiert.

Gemäß einer weiteren Ausgestaltung weist das Sperrelement einen gebogenen Längsabschnitt mit zu der Bolzenachse paralleler Biegeachse auf.

Gemäß einer weiteren Ausgestaltung ist, als eine zusätzliche Sicherung des Schließbolzens gegen sein Herausziehen in Löserichtung, der Schließbolzen an seinem dem Bolzenkopf abgewandten Bolzenende mit einer Nut versehen, in die sich ein handelsüblich gestalteter Sicherungsring als zusätzliches Arretierelement einsetzen lässt.

Gemäß einer weiteren Ausgestaltung befinden sich die Öffnungen, durch welche der Schließbolzen hindurchführt, in an den Gehäuseteilen angeformten Ösen.

Um zu verhindern, dass es unbeabsichtigt zu einem entsperrenden Druck auf das Sperrelement kommt, ist vorzugsweise das Sperrelement zwischen zwei dieser Ösen angeordnet und ragt nicht über deren Außenkontur hinaus.

Weitere Einzelheiten und Vorteile werden nachstehend anhand der Zeichnungen näher erläutert. Darin zeigen
- Fig. 1:: eine stark vereinfachte Darstellung eines Nutzfahrzeugs zur Veranschaulichung der Anordnung und Verwendung einer erfindungsgemäßen Vorrichtung an einem Gurtband, welches der Sicherung von Ladungsgütern dient;
- Fig. 2:: eine in Teilen nicht erfindungsgemäße Vorrichtung in geschlossenem Zustand und mit nur angedeuteter Lage eines hindurchgeführten Gurtbandes;
- Fig. 3:: eine entsprechende Darstellung in seitlich geöffnetem Zustand;
- Fig. 4:: eine Schnittansicht zur Veranschaulichung des Aufbaus der Vorrichtung in geschlossenem Zustand;
- Fig. 5:: eine Prinzipdarstellung zur Funktion der Gurtkraftdetektion;
- Fig. 6:: eine erfindungsgemäße Vorrichtung;
- Fig. 7:: eine Schnittdarstellung der Verschlusselemente bei der Ausführungsform nach Fig. 6;
- Fig. 8:: eine Ansicht nur eines Schließbolzens;
- Fig. 9a:: einen Schnitt in der Schnittebene IX-IX in Fig. 7;
- Fig. 9b:: die Gegenstände der Fig. 9a bei Ausübung eines entriegelnden Drucks;
- Fig. 10a:: eine Variante eines Schnitts in der Schnittebene IX-IX in Fig. 7;
- Fig. 10b:: die Gegenstände der Fig. 10a bei Ausübung eines entriegelnden Drucks;
- Fig. 11: eine weitere Variante der Vorrichtung in einer Schnittdarstellung.

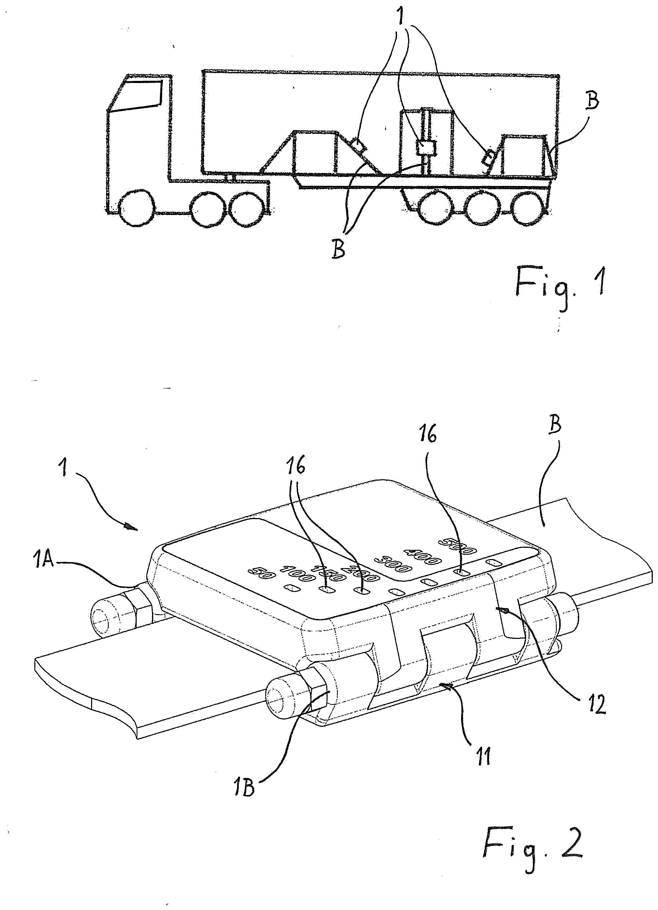

Gemäß Fig. 1 weist ein Nutzfahrzeug eine Ladefläche auf, auf der mehre Ladegüter für den Transport positioniert, und jeweils mittels als Spanngurte ausgebildeter, flacher Gurtbänder B gegen Verrutschen auf der Ladefläche gesichert sind. Die Gurtbänder B sind z. B. mittels einer Ratsche festgezurrt und stehen somit unter starker Zugspannung. Alle Gurtbänder B weisen zur Sensierung und Kontrolle der in ihnen herrschenden Gurtspannkraft eine an den Gurt ansetzbare Vorrichtung mit einem Gehäuse 1 auf, welches am jeweiligen Gurtband B fixiert wird.

Gemäß den Figuren 1 - 3, die eine in Teilen nicht erfindungsgemäße Vorrichtung zeigen, umfasst das Gehäuse 1 ein erstes Gehäuseteil 11 und zweites Gehäuseteil 12. Das erste Gehäuseteil 11 ist hier das Unterteil, und das zweite Gehäuseteil 12 das Oberteil des Gehäuses 1. Die beiden Gehäuseteile 11, 12 bilden gemeinsam und zwischen sich eine Hindurchführung für das Gurtband B.

Das erste Gehäuseteil 11 und das zweite Gehäuseteil 12 sind an einem ersten, sich in Gurtlängsrichtung erstreckenden Gehäuserand, welcher im Folgenden als Scharnierrand 1A bezeichnet wird, über ein Gelenk verschwenkbar miteinander verbunden.

An dem zu dem Scharnierrand 1A parallelen zweiten Gehäuserand, welcher im Folgenden als der Verschlussrand 1B des Gehäuses 1 bezeichnet wird, ist ein Schließmechanismus zum Verschließen des Gehäuses vorgesehen.

Das Gelenk und der Schließmechanismus sind also an unterschiedlichen Längsrändern des Gehäuses 1 angeordnet, die sich aber beide in Gurtlängsrichtung erstrecken.

Außen an dem Gehäuseteil 12 befindet sich eine optische Anzeige 16, hier in der Bauart einer LED-Anzeige mit mehrere LED-Leuchtpunkten. Neben jedem LED-Leuchtpunkt der Anzeige 16 ist ein zugeordneter Zahlenwert abgebildet, der dem Wert oder einem Wertebereich der gemessenen Gurtspannkraft im Gurtband B entspricht. Der gemessene Wert kann z. B. drahtlos mittels einer App an eine externe Anzeigeeinheit, z. B. auf einem Smartphone, übertragen werden. Oder der Wert wird dem Fahrer auf einem im Fahrerhaus des Fahrzeugs angeordneten Display angezeigt, so dass jederzeit kontrollierbar ist, ob die einzelnen Gurtbänder B eine für die Ladungssicherung ausreichende Zugspannung aufweisen.

An dem ersten Gehäuseteil 11 sind zwei zueinander beabstandete Auflagebereiche 6a, 6b zur Auflage des Gurtbandes B ausgebildet. Die Auflagebereiche 6a, 6b sind einstückig mit dem ersten Gehäuseteil 11. Zwischen den beiden Auflagebereichen 6a, 6b befindet sich in dem ersten Gehäuseteil 11 eine Ausnehmung, die Platz bietet für einen seitlichen Versatz des dort hindurchführenden Bandabschnitts des Gurtbandes B.

Ein Verlagerungselement 7 ist senkrecht zur Längsrichtung des Gurtbandes B beweglich in dem zweiten Gehäuseteil 12 angeordnet. Bei geöffnetem Gehäuse 1 liegt das Verlagerungselement 7 in einer maximalen Verlagerungsposition vor, in der sich das Verlagerungselement 7 maximal in die Ausnehmung in dem ersten Gehäuseteil 11 hinein erstreckt. Auch nach dem Einlegen des Gurts B und dem Schließen Gehäuses 1 liegt das Verlagerungselement zunächst in der maximalen Verlagerungsposition vor. Wird dann aber das Gurtband unter Spannung gesetzt, so bewegt sich das Verlagerungselement 7 durch den auf das Verlagerungselement 7 wirkenden Druck des Gurtbandes B zu dem zweiten Gehäuseteil 12 hin, wobei sich das Verlagerungselement 7 also senkrecht zur Längsrichtung des Gurtbandes B bewegt und das Verlagerungselement 7 unter Druck gegen die Flachseite des Gurtbands B anliegt.

Das Verlagerungselement 7 ist mit einem Sensor 8 wirkverbunden. Der Sensor 8 ist ausgebildet, die Auslenkung des Verlagerungselement 7 und/oder den Druck auf das Verlagerungselement 7 in Folge der Spannkraft in dem Gurtband B zu erfassen, und in entsprechende Messsignale umzuwandeln, um so während des Transports der Ladegüter die Größe der aktuellen Gurtspannung zumindest stichpunktweise automatisch zu überwachen.

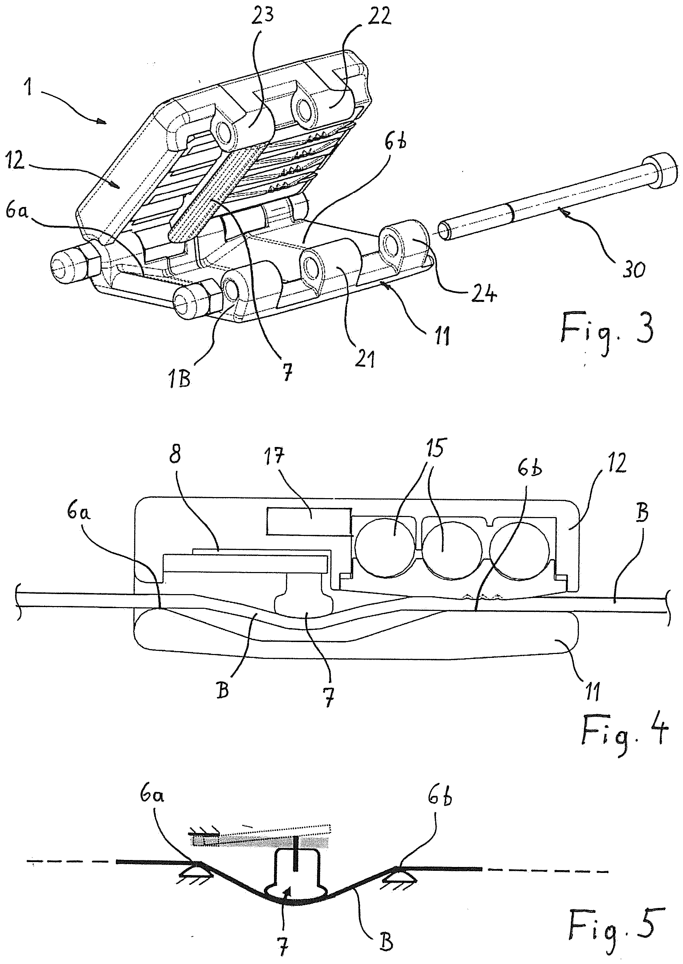

Gemäß Figur 4 führt das Gurtband B nicht in gerader Linie, sondern in Gestalt einer um das Verlagerungselement 7 führenden, einmaligen seitlichen Auslenkung bzw. eines einmaligen seitlichen Versatzes durch das Gehäuse 1. Der Druck auf das Verlagerungselement 7 ist daher umso größer, je größer die Zugkraft in dem Gurtband B ist.

Der Sensors 8 kann z. B. als mit einer Wägezelle arbeitender Kraftsensor ausgebildet sein. An den Wägezellen können Dehnungsmessstreifen angeordnet sein, um die Verformung der Wägezellen zu detektieren. Die Messgröße ist ein Maß für die Gurtspannkraft in Gurtband B und wird über die Anzeige 16 direkt am Gehäuse angezeigt bzw. zur jederzeitigen Kontrolle drahtlos an die externe Anzeigeeinheit, z. B. das Smartphone des Fahrers, übermittelt.

Der Sensor 8 wird mittels eines Batteriemoduls 15 mit elektrischer Energie versorgt. Das Batteriemodul 15 ist in einem Batteriefach des Gehäuses 1 angeordnet. Die Öffnung des Batteriefachs ist zu dem Gurtband B hin ausgerichtet, um einen Zugriff auf das Batteriemodul 15 bei geschlossenem Gehäuse 1 zu verhindern.

In Gehäuse 1 befindet sich ferner eine Auswerte- und Sendeeinheit 17 für die Sensorsignale des Sensors 8. Die Auswerte- und Sendeeinheit 17 und die Anzeigeeinheit 16 sind jeweils in dem zweiten Gehäuseteil 12 angeordnet, und sie werden von dem ebenfalls in dem zweiten Gehäuseteil 12 angeordneten Batteriemodul 15 mit der notwendigen elektrischen Energie versorgt.

Die Fig. 1 zeigt das Gehäuse 1 in seitlich geöffnetem Zustand, in dem das Oberteil nur noch über das Gelenk an dem Scharnierrand 1A mit dem Unterteil verbunden ist. Als Gelenk bzw. Scharnier sind am ersten Gehäuseteil 11 und am zweiten Gehäuseteil 12 jeweils Ösen angeformt, die in Längsrichtung des Gehäuses 1 einander abwechseln und gemeinsam einen Bolzen als Scharnierbolzen 29 aufnehmen. Mit anderen Worten sind die Gehäuseteile 11, 12 um diesen Scharnierbolzen 29 gegeneinander verschwenkbar, bleiben aber vorzugsweise miteinander verbunden.

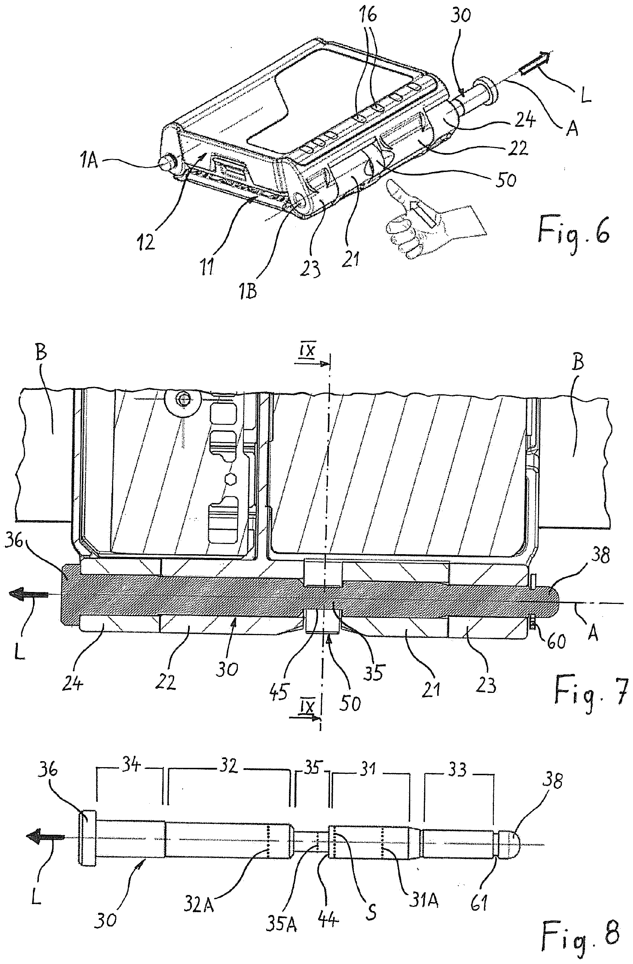

Ausgestaltungen des Schließmechanismus an dem anderen Längsrand des Gehäuses, also an dem Verschlussrand, werden nachfolgend anhand der Figuren 6 bis 11 beschrieben.

An dem Verschlussrand 1B des Gehäuses 1 ist an dem ersten Gehäuseteil 11 und ist an dem zweiten Gehäuseteil 12 jeweils mindestens eine Öse ausgebildet, wobei beim Ausführungsbeispiel zwei Ösen 21, 24 an dem unteren Gehäuseteil 11, und ebenfalls zwei Ösen 22, 23 an dem oberen Gehäuseteil 12 angeformt sind, und wobei sich in Längsrichtung jeweils Ösen 21, 24 des ersten Gehäuseteils 11 mit Ösen 22, 23 des zweiten Gehäuseteils 12 abwechseln. Gemäß Fig. 7 weisen alle Ösen 21, 22, 23, 24 als Bohrungen gestaltete Öffnungen auf, die zwar unterschiedliche Durchmesser aufweisen können, aber im Schließzustand alle auf einer gemeinsamen Bolzenachse A zueinander fluchtend angeordnet sind. Alle Öffnungen gemeinsam nehmen, im Schließzustand, einen in Längsrichtung durch die Öffnungen hindurchgesteckten Schließbolzen 30 auf. Dieser besteht aus Metall, wohingegen die Gehäuseteile 11, 12 und damit auch die daran einstückig angeformten Ösen 21, 22, 23, 24 aus einem schlagfesten Kunststoff bestehen.

Die Figuren 7 und 8 zeigen, dass an dem Schließbolzen 30 auf der Bolzenachse A zueinander fluchtende Längsabschnitte mit teils unterschiedlichen Durchmessern und damit Querschnitten ausgebildet sind.

Im in Fig. 7 wiedergegebenen Schließzustand durchragt der Längsabschnitt 33 des Schließbolzens die Öffnung in der Öse 23, der Längsabschnitt 31 die Öffnung in der Öse 21, der Längsabschnitt 32 die Öffnung in der Öse 22 und der Längsabschnitt 34 die Öffnung in der Öse 24. Der Durchmesser auf den Längsabschnitten 31 - 34 entspricht, bis auf die erforderliche Toleranz, dem jeweiligen Durchmesser der als Bohrung gestalteten Öffnung.

Zum Entfernen des Schließbolzens 30 wird dieser entlang seiner Bolzenachse in Löserichtung L aus den Ösen herausgezogen, also nach links in der Figur 7. Um umgekehrt das axiale Einstecken des Schließbolzens 30 von links nach rechts in Fig. 7 möglichst leicht zu gestalten, weisen die einzelnen Längsabschnitte jeweils geringer werdende Durchmesser auf, wobei alle diese Durchmesser jeweils zylindrisch sind.

Ausgehend von einem gegenüber allen übrigen Bolzenquerschnitten erweiterten Bolzenkopf 36, mit dem der Schließbolzen axial gegen das Gehäuse 1 abgestützt ist, weist der Schließbolzen 30 auf dem an den Bolzenkopf 36 angrenzenden Längsabschnitt 34 den größten Durchmesser auf. Der dann folgende Längsabschnitt 32 ist von geringerem Durchmesser, und der dann folgende Längsabschnitt 31 von nochmals geringerem Durchmesser. Auf dem letzten Längsabschnitt 33 schließlich ist der Bolzendurchmesser am geringsten.

An den letzten Längsabschnitt 33 schließt sich noch ein kurzes Bolzenende 38 an, welches rundlich oder kegelförmig gestaltet ist, um das axiale Einführen des Schließbolzens 30 durch die zueinander fluchtenden Öffnungen hindurch zu vereinfachen.

Zur Längsverriegelung des Schließbolzens 30 weist dieser zwischen den Längsabschnitten 31 und 32, wobei auf dem Längsabschnitt 32 dessen Querschnitt 32A größer ist als der Querschnitt 31A auf dem Längsabschnitt 31, einen weiteren Längsabschnitt als Sperrabschnitt 35 auf.

Der Schließbolzen weist auf dem Sperrabschnitt 35 einen gegenüber dem Bolzenquerschnitt 32A auf dem Längsabschnitt 32 reduzierten Bolzenquerschnitt 35A auf. Der Sperrabschnitt 35 ist relativ kurz. Er reicht, entgegen der Löserichtung L des Schließbolzens, bis an einen unmittelbar auf den Sperrabschnitt 35 folgenden, größeren Bolzenquerschnitt S. Dabei ist der Übergang zwischen dem Sperrabschnitt 35 und dem entgegen der Löserichtung L unmittelbar auf den Sperrabschnitt 35 folgenden, größeren Bolzenquerschnitt S als eine stufenförmige Erweiterung 44 gestaltet.

Ein Sperrelement 50, welches entweder an dem Gehäuseteil 11 oder an dem Gehäuseteil 12 des Gehäuses 1 unbeweglich festgelegt ist, erstreckt sich radial gegen die Außenseite 45 des Sperrabschnitts 35, und liegt zugleich der stufenförmigen Erweiterung 44 axial gegenüber. Der Eingriff des Sperrelements 50 in den Sperrabschnitt 35 führt, in Verbindung mit dem erweiterten Bolzenkopf 36, insgesamt zu einer Längsverriegelung des Schließbolzens 30 im Gehäuse, also zu dessen Verriegelung in beide Richtungen der Bolzenachse A.

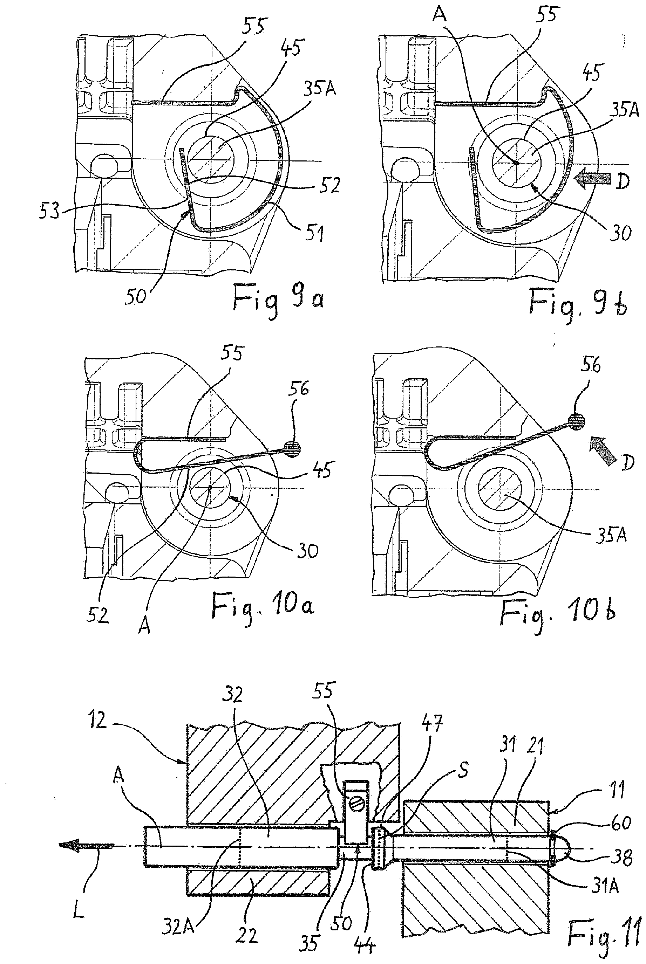

Fig. 11 zeigt eine andere Ausführungsform der Vorrichtung. Bei Fig. 11 fehlt ein radial erweiterter Bolzenkopf am Ende des Schließbolzens 30. Außerdem arbeitet die Verriegelung des Gehäuses 1 hier mit nur zwei Ösen 21, 22, wobei die Öse 21 an dem ersten Gehäuseteil 11, und die Öse 22 an dem zweiten Gehäuseteil 12 angeformt ist. Der Schließbolzen 30 führt mit einem ersten Längsabschnitt 31 von geringerem Bolzenquerschnitt 31A durch die Bohrung der Öse 21, und mit einem zweiten Längsabschnitt 32 von größerem Bolzenquerschnitt 32A durch die Bohrung der Öse 22. Wie bei der Ausführungsform nach den Figuren 7 und 8 befindet sich zwischen den Längsabschnitten 31 und 32 der als Sperrabschnitt 35 dienende, weitere Längsabschnitt für den Eingriff des Sperrelements 50.

Die Besonderheit bei Fig. 11 liegt darin, dass zwar wiederum der Bolzenquerschnitt auf dem Sperrabschnitt 35 reduziert ist gegenüber dem Bolzenquerschnitt 32A auf dem zweiten Längsabschnitt 32, jedoch gleich groß ist wie der Bolzenquerschnitt 31A auf dem ersten Längsabschnitt 31. Um trotzdem das Sperren durch das Sperrelement 50 zu erreichen, ist der Schließbolzen 30 zwischen dem Sperrabschnitt 35 und dem Längsabschnitt 31 gleichen Durchmessers mit einem auf den Sperrabschnitt 35 unmittelbar folgenden Längsabschnitt versehen, auf dem der Bolzenquerschnitt S größer ist als auf dem Sperrabschnitt 35. Dieser vergrößerte Bolzenquerschnitt S wird hier durch einen Bund 47 gebildet. Der Bund 47 bildet hier also die stufenförmige Erweiterung 44.

Die Figuren 9a und 9b zeigen das Zusammenwirken des Sperrelements 50 mit dem Schließbolzen 30. Das Sperrelement 50 ist ein Metallstreifen 51 mit einem durch zwei Flächen 52, 53 und zwei Seitenränder begrenzten Querschnitt. Mit der Fläche 52 ist der Metallstreifen 51 radial gegen die Außenseite 45 auf dem Sperrabschnitt 35 abgestützt. Die Abstützung kann federnd sein, wenn der Metallstreifen 51 aus einem gebogenen, federelastischen Bandmaterial besteht.

Der das Sperrelement 50 bildende Metallstreifen 51 ist von solcher Breite, dass einer der beiden Seitenränder des Metallstreifens 51 der stufenförmigen Erweiterung 44 an dem Schließbolzen 30 axial gegenüberliegt.

Gemäß Fig. 9a ragt das Sperrelement 50 nicht auf ganzer Länge in den eine Nut bildenden Sperrabschnitt 35, sondern nur mit einem kurzen Abschnitt. Dies reicht aber aus, den Schließbolzen 30 in Richtung seiner Bolzenachse A zu sichern. Denn für diese Sicherung ist entscheidend, dass sich der Abschnitt axial gegen die stufenförmige Erweiterung 44 an dem Schließbolzen abstützt, und damit eine Längsbewegung des Schließbolzens blockiert.

Das Aufheben dieser Blockade erschließt sich aus einem Vergleich der Fig. 9a, welche den normalen Zustand des Sperrelements 50 zeigt, mit der Fig. 9b, in der das Sperrelement 50 durch manuelle Druckausübung D in Richtung auf die Bolzenachse A verformt wird. Die zugleich zu dem Gehäuse 1 hin gerichtete Druckausübung D bewirkt eine elastische Verformung des federnden Sperrelements 50, wodurch dessen verriegelnder Abschnitt sich quer zur Bolzenachse A so weit von der Mantelfläche des Sperrabschnitt 35 entfernt, dass der Schließbolzen 30 entsperrt ist und dann, etwa durch Zug an dem Bolzenkopf 36, aus den Ösen 21 - 24 herausgezogen werden kann.

Für die beschriebene Funktion ist es wichtig, dass das Sperrelement 50 eindeutig an dem Gehäuse 1 fixiert ist, also entweder an dem ersten Gehäuseteil 11 oder an dem zweiten Gehäuseteil 12. Zu diesem Zweck ist, wie vor allem Fig. 11 zeigt, zumindest ein Endabschnitt 55 des Metallstreifens 51 so an dem Gehäuse 1 festgelegt, dass das Sperrelement 50 in beide Richtungen der Bolzenachse A unbeweglich gegenüber dem Gehäuse ist. Hierzu ist auf dem Endabschnitt 55 der eine Seitenrand des Sperrelements 50 gegen eine erste Gehäusefläche, und zugleich der andere Seitenrand des Metallstreifens 51 gegen eine zweite Gehäusefläche aus dem zweiten Gehäuseteil 12 abgestützt. Damit ist jede Beweglichkeit des Sperrelements 50 längs der Bolzenachse A ausgeschlossen. Das Sperrelement ist nur quer zur Bolzenachse A federnd beweglich.

Bei der Ausführungsform nach den Figuren 6, 7, 9a und 9b ist sichergestellt, dass das Sperrelement 50 nicht nach außen über die Kontur der beiden unmittelbar benachbarten Ösen 21, 22 hinausragt. Die insoweit gegenüber den unmittelbar benachbarten Ösen "versenkte" Bauart des Sperrelements 50 vermeidet ein versehentliches Entsperren. Zugleich ist zwischen diesen benachbarten Ösen 21, 22 noch genügend Platz, um mit dem Daumen oder einem Finger die Druckausübung D durchzuführen und so das Sperrelement 50 in seine Entriegelungsstellung zu verformen.

Die Figuren 10a und 10b zeigen eine andere Ausführungsform des Sperrelements. Der Metallstreifen 51 ist an seinem freien, also nicht gehäusefesten Ende mit einer Taste 56 versehen und lässt sich durch seitlichen Druck auf die Taste soweit elastisch verformen, dass der Schließbolzen 30 freigegeben wird.

Als eine zusätzliche Sicherung des Schließbolzens 30 gegen sein Herausziehen in Löserichtung L ist der Schließbolzen 30 an seinem dem Bolzenkopf 36 abgewandten Bolzenende 38 mit einer Nut 61 versehen, in die ein handelsüblicher Sicherungsring 60 als ein zusätzliches Arretierelement einsetzbar ist.

### Bezugszeichenliste

- 1: Gehäuse
- 1A: Scharnierrand
- 1B: Verschlussrand
- 6a: Auflagebereich
- 6b: Auflagebereich
- 7: Verlagerungselement
- 8: Sensor
- 11: erstes Gehäuseteil
- 12: zweites Gehäuseteil
- 15: Batteriemodul
- 16: Anzeige
- 17: Auswerte- und Sendeeinheit
- 21: Öse
- 22: Öse
- 23: Öse
- 24: Öse
- 29: Scharnierbolzen
- 30: Schließbolzen
- 31: erster Längsabschnitt
- 31A: Querschnitt
- 32: zweiter Längsabschnitt
- 32A: Querschnitt
- 33: Längsabschnitt
- 34: Längsabschnitt
- 35: Sperrabschnitt
- 35A: Bolzenquerschnitt
- 36: Bolzenkopf
- 38: Bolzenende
- 44: stufenförmige Erweiterung
- 45: Außenseite
- 47: Bund
- 50: Sperrelement
- 51: Metallstreifen
- 52: Fläche
- 53: Fläche
- 55: Endabschnitt
- 56: Taste
- 60: Sicherungsring
- 61: Nut

- A: Bolzenachse
- B: Gurtband
- D: Druckausübung
- L: Löserichtung des Bolzens
- S: Bolzenquerschnitt

## Patentansprüche

1. Vorrichtung zur Überwachung der in einem Gurtband (B) wirkenden Spannkraft, mit einem ein erstes Gehäuseteil (11) und ein zweites Gehäuseteil (12) umfassenden Gehäuse (1), einer Hindurchführung zwischen den Gehäuseteilen (11, 12) für das Gurtband (B), einem in dem Gehäuse (1) angeordneten, gegen eine der Flachseiten des Gurtbandes (B) anliegenden Sensorbauteil (8), und einer Einrichtung zum Erfassen der Auslenkung oder der Auslenkkraft des Sensorbauteils (8) quer zur Gurtlängsrichtung, wobei die Gehäuseteile (11, 12) einerseits an einem ein Gelenk bildenden Scharnierrand (1A) und andererseits an einem Verschlussrand (1B) miteinander verbunden sind, wobei sich ein Schließbolzen (30) mit seiner Bolzenachse (A) längs des Verschlussrandes (1B) erstreckt und mit einem ersten Längsabschnitt (31) durch eine Öffnung in dem ersten Gehäuseteil (11), und mit einem zweiten Längsabschnitt (32) durch eine Öffnung in dem zweiten Gehäuseteil (12) hindurchführt, **dadurch gekennzeichnet, dass** zur Längsverriegelung des Schließbolzens (30) dieser zusätzlich einen Sperrabschnitt (35) aufweist, auf dem der Bolzenquerschnitt (35A) reduziert ist
- gegenüber dem Bolzenquerschnitt auf dem ersten Längsabschnitt (31) und/oder gegenüber dem Bolzenquerschnitt auf dem zweiten Längsabschnitt (32),
- gegenüber einem entgegen der Löserichtung (L) des Schließbolzens (30) auf den Sperrabschnitt (35) unmittelbar folgenden Bolzenquerschnitt (S),
und dass ein Sperrelement (50), welches in beide Richtungen der Bolzenachse (A) unbeweglich an dem Gehäuse (1) festgelegt ist, gegen den Sperrabschnitt (35) anliegt.

2. Vorrichtung nach Anspruch 1, **dadurch gekennzeichnet, dass** ein an dem einen Ende des Schließbolzens (30) ausgebildeter Bolzenkopf (36) entgegen der Löserichtung (L) an dem Gehäuse (1) axial abgestützt ist.

3. Vorrichtung nach Anspruch 1 oder 2, **dadurch gekennzeichnet, dass** das Sperrelement (50) federnd gegen die Außenseite (45) des Sperrabschnitts (35) abgestützt ist.

4. Vorrichtung nach einem der Ansprüche 1 bis 3, **dadurch gekennzeichnet, dass** das Sperrelement (50) ein Metallstreifen (51) mit einem durch zwei Flächen (52, 53) und zwei Seitenränder begrenzten Querschnitt ist, wobei der Metallstreifen (51) mit einer der Flächen (52) gegen die Außenseite (45) des Sperrabschnitts (35) abgestützt ist.

5. Vorrichtung nach Anspruch 4, **dadurch gekennzeichnet, dass** einer der beiden Seitenränder des Metallstreifens (51) der stufenförmigen Erweiterung (44) axial gegenüberliegt.

6. Vorrichtung nach Anspruch 4 oder 5, **dadurch gekennzeichnet, dass** der Metallstreifen (51) aus einem federelastischen Material besteht.

7. Vorrichtung nach Anspruch 4, 5 oder 6, **dadurch gekennzeichnet, dass** ein Endabschnitt des Metallstreifens (51) an dem Gehäuse (1) festgelegt ist, und dass auf dem Endabschnitt der eine Seitenrand des Metallstreifens gegen eine erste Gehäusefläche und zugleich der andere Seitenrand des Metallstreifens gegen eine zweite Gehäusefläche anliegt.

8. Vorrichtung nach einem der vorangehenden Ansprüche, **dadurch gekennzeichnet, dass** das Sperrelement (50) mindestens einen gebogenen Längsabschnitt mit zu der Bolzenachse (A) paralleler Biegeachse aufweist.

9. Vorrichtung nach einem der vorangehenden Ansprüche, **dadurch gekennzeichnet, dass** der Schließbolzen (30) an seinem dem Bolzenkopf (36) abgewandten Bolzenende mit einer Nut (61) zur Aufnahme eines Sicherungsrings (60) versehen ist.

10. Vorrichtung nach einem der vorangehenden Ansprüche, **dadurch gekennzeichnet, dass** sich die Öffnungen in an den Gehäuseteilen (11, 12) angeformten Ösen (21, 22, 23, 24) befinden, und dass das Sperrelement (50) zwischen zwei dieser Ösen angeordnet ist und nicht über deren Außenkontur hinausragt.

## Claims

1. Apparatus for monitoring the clamping force acting in a belt strap (B), comprising a housing (1) having a first housing part (11) and a second housing part (12), a passage between the housing parts (11, 12) for the belt strap (B), a sensor component (8) arranged in the housing (1) and resting against one of the flat faces of the belt strap (B), and a device for detecting the deflection or the deflection force of the sensor component (8) transversely to the belt longitudinal direction, the housing parts (11, 12) being connected to one another on one side at a hinge edge (1A) forming a joint and on the other side at a closure edge (1B), a locking bolt (30) extending with its bolt axis (A) along the closure edge (1B) and passing with a first longitudinal portion (31) through an opening in the first housing part (11) and with a second longitudinal portion (32) through an opening in the second housing part (12), **characterized in that** for the longitudinal locking of the locking bolt (30), said locking bolt additionally has a blocking portion (35) on which the bolt cross section (35A) is reduced
- with respect to the bolt cross section on the first longitudinal portion (31) and/or with respect to the bolt cross section on the second longitudinal portion (32),
- with respect to a bolt cross section (S) directly following the blocking portion (35) counter to the release direction (L) of the locking bolt (30),
and **in that** a blocking element (50), which is fixed immovably on the housing (1) in both directions of the bolt axis (A), abuts against the blocking portion (35).

2. Apparatus according to claim 1, **characterized in that** a bolt head (36) formed on the one end of the locking bolt (30) is axially supported on the housing (1) counter to the release direction (L).

3. Apparatus according to claim 1 or 2, **characterized in that** the blocking element (50) is resiliently supported against the outer face (45) of the blocking portion (35).

4. Apparatus according to any of claims 1 to 3, **characterized in that** the blocking element (50) is a metal strip (51) having a cross section delimited by two surfaces (52, 53) and two side edges, the metal strip (51) being supported with one of the surfaces (52) against the outer face (45) of the blocking portion (35).

5. Apparatus according to claim 4, **characterized in that** one of the two side edges of the metal strip (51) is axially opposite the stepped extension (44).

6. Apparatus according to claim 4 or 5, **characterized in that** the metal strip (51) consists of a resilient material.

7. Apparatus according to claim 4, 5 or 6, **characterized in that** an end portion of the metal strip (51) is fixed to the housing (1), and **in that**, on the end portion, one side edge of the metal strip abuts against a first housing surface and at the same time the other side edge of the metal strip abuts against a second housing surface.

8. Apparatus according to any of the preceding claims, **characterized in that** the blocking element (50) has at least one curved longitudinal portion with a bending axis parallel to the bolt axis (A).

9. Apparatus according to any of the preceding claims, **characterized in that** the locking bolt (30) is provided, on its bolt end facing away from the bolt head (36), with a groove (61) for receiving a securing ring (60).

10. Apparatus according to any of the preceding claims, **characterized in that** the openings are located in eyelets (21, 22, 23, 24) integrally formed on the housing parts (11, 12), and **in that** the blocking element (50) is arranged between two of these eyelets and does not protrude beyond the outer contour thereof.

## Revendications

1. Dispositif de surveillance de la force de serrage agissant dans une sangle (B), avec un boîtier (1) comprenant une première partie de boîtier (11) et une deuxième partie de boîtier (12), un passage entre les parties de boîtier (11, 12) pour la sangle (B), un composant de capteur (8) disposé dans le boîtier (1), s'appliquant contre une des faces plates de la sangle (B), et un système pour détecter la déviation ou la force de déviation du composant de capteur (8) transversalement par rapport à la direction longitudinale de sangle, dans lequel les parties de boîtier (11, 12) sont reliées l'une à l'autre d'une part sur un bord de charnière (1A) formant une articulation et d'autre part sur un bord d'obturation (1B), dans lequel un boulon de fermeture (30) s'étend avec son axe de boulon (A) le long du bord d'obturation (1B) et avec une première partie longitudinale (31) à travers une ouverture dans la première partie de boîtier (11), et avec une deuxième partie longitudinale (32) à travers une ouverture dans la deuxième partie de boîtier (12), **caractérisé en ce que** pour le verrouillage longitudinal du boulon de fermeture (30) celui-ci présente en plus une partie de blocage (35), sur laquelle la section transversale de boulon (35A) est réduite
- par rapport à la section transversale de boulon sur la première partie longitudinale (31) et/ou par rapport à la section transversale de boulon sur la deuxième partie longitudinale (32),
- par rapport à une section transversale de boulon (S) succédant directement à la partie de blocage (35) à l'encontre de la direction de desserrage (L) du boulon de fermeture (30),
et qu'un élément de blocage (50), lequel est fixé de manière immobile dans les deux directions de l'axe de boulon (A) sur le boîtier (1), s'applique contre la partie de blocage (35) .

2. Dispositif selon la revendication 1, **caractérisé en ce qu'**une tête de boulon (36) réalisée sur l'une des extrémités du boulon de fermeture (30) est axialement en appui sur le boîtier (1) à l'encontre de la direction de desserrage (L) .

3. Dispositif selon la revendication 1 ou 2, **caractérisé en ce que** l'élément de blocage (50) est en appui de manière élastique contre la face extérieure (45) de la partie de blocage (35).

4. Dispositif selon l'une quelconque des revendications 1 à 3, **caractérisé en ce que** l'élément de blocage (50) est une bande métallique (51) avec une section transversale délimitée par deux surfaces (52, 53) et deux bords latéraux, dans lequel la bande métallique (51) est en appui avec une des surfaces (52) contre la face extérieure (45) de la partie de blocage (35) .

5. Dispositif selon la revendication 4, **caractérisé en ce qu'**un des deux bords latéraux de la bande métallique (51) est axialement opposé à l'élargissement (44) étagé.

6. Dispositif selon la revendication 4 ou 5, **caractérisé en ce que** la bande métallique (51) est constituée d'un matériau élastique.

7. Dispositif selon la revendication 4, 5 ou 6, **caractérisé en ce qu'**une partie d'extrémité de la bande métallique (51) est fixée sur le boîtier (1), et que sur la partie d'extrémité l'un des bords latéraux de la bande métallique s'applique contre une première surface de boîtier et simultanément l'autre bord latéral de la bande métallique contre une deuxième surface de boîtier.

8. Dispositif selon l'une quelconque des revendications précédentes, **caractérisé en ce que** l'élément de blocage (50) présente au moins une partie longitudinale courbée avec l'axe de courbure parallèle à l'axe de boulon (A).

9. Dispositif selon l'une quelconque des revendications précédentes, **caractérisé en ce que** le boulon de fermeture (30) est pourvu sur son extrémité de boulon opposée à la tête de boulon (36) d'une rainure (61) pour la réception d'un anneau de sécurité (60).

10. Dispositif selon l'une quelconque des revendications précédentes, **caractérisé en ce que** les ouvertures se trouvent dans des œillets (21, 22, 23, 24) formés sur les parties de boîtier (11, 12), et que l'élément de blocage (50) est disposé entre deux de ces œillets et ne fait pas saillie du contour extérieur de ceux-ci.
